# EUROPEAN PATENT SPECIFICATION

(11) **EP 2 783 426 B1**
(45) Date of publication and mention of the grant of the patent: **02.05.2018**
(21) Application number: 12701473.6
(22) Date of filing: 17.01.2012
(51) Int. Cl.: H01R 13/62, G06F 1/16, H02J 7/00

(54) **AN ELECTRICAL DEVICE**
ELEKTRISCHE VORRICHTUNG
DISPOSITIF ÉLECTRIQUE

(30) Priority: 22.11.2011 US 201161562568 P
(43) Date of publication of application: 01.10.2014
(73) Proprietor: Sony Mobile Communications Inc., Shinagawa-ku Tokyo 140-0002 (JP)
(72) Inventor: WERGELAND, Björn, S-246 51 Löddeköpinge (SE); ABRAHAMSSON, Magnus, S-246 50 Löddeköpinge (SE)
(74) Representative: Awapatent AB
(86) International application number: PCT/EP2012/050638
(87) International publication number: WO 2013/075847

(56) References cited:
- WO-A1-2008/085866
- US-A- 5 812 356
- US-A- 6 030 229
- US-A1- 2007 072 442
- US-A1- 2008 150 482
- US-A1- 2010 233 889
- US-A1- 2012 021 619

## Description

### TECHNICAL FIELD

Embodiments herein relates to an electrical device and a method therein in general and more particular to an electrical device connectable to a connector head by means of magnetic force and a method therein.

### BACKGROUND

In modern electrical devices an important feature is to connect the electrical device to any kind of accessory. One way to connect to the accessories is to use a cable. In the section below, the background will be described in the context that a charger is connected to a chargeable device, but it is understood that this also applies to any connection to an electrical device using any kind of cable.

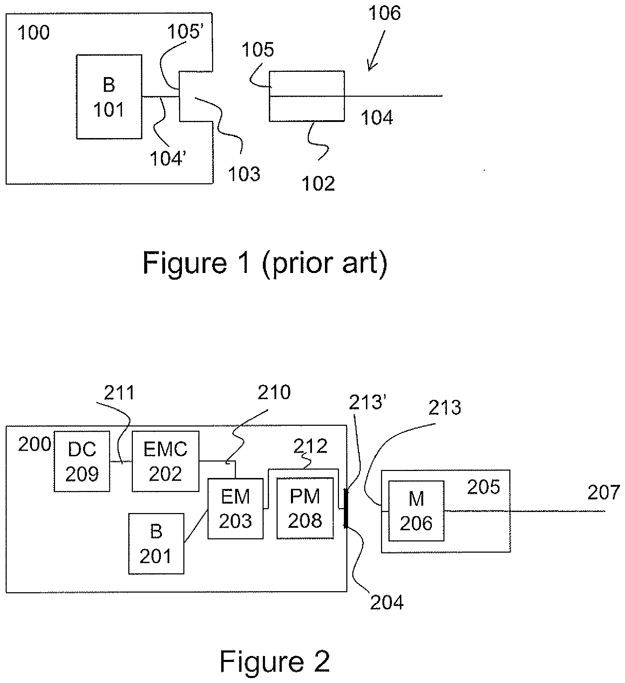

With the increasing demands for mobility of modern electronics come increased demands for battery power. Increased battery power in a chargeable electrical device, such as a laptop, mobile telephone, camera etc. leads to longer stand by time, higher output power, possibility to connect more accessories to the chargeable electrical device etc. This also leads to higher demands on the charging process of the battery. US 2007/072442 A1 discloses an electrical plug and receptacle relying on magnetic force from an electromagnet to maintain contact. The plug and receptacle can be used as part of a power adapter for connecting an electronic device, such as a laptop computer, to a power supply. **Figure 1** illustrates **a chargeable electrical device 100** and **a charger 106** according to prior art. **A battery 101** of the chargeable electrical device 100 is charged via charging wires 104'. In order to not deteriorate the figure only one charging wire is illustrated. The charger 106, only partly visible in the figure, comprises **a charging connector head 102,** and **charging wires 104.** In order to not deteriorate the figure only one charging wire is illustrated. The charging connector head 102 is inserted in **a charging socket 103** of the chargeable electrical device 100 so the charging wires 104 of the charging connector head 102 comes in contact with **charging wires 104'** of the chargeable electrical device 100. Typically the charging connector head 102 has a **contact surface 105** and the chargeable electrical device 100 has a corresponding **contact surface 105'.** The contact surfaces 105, 105' are configured to ensure that the charging connector head 102 stays connected to the chargeable electrical device 100 while charging the battery.

Another way to ensure that the charging connector head 102 stays connected to the chargeable electrical device 100 is to utilize some mechanical means such as a spring or a hook to keep the parts together. The spring or hook is not involved in the electrical connection.

A problem with the prior art is that over time the contact surfaces 105, 105', and the mechanical means, get mechanically worn and loses their function. This may cause the charging connector head 102 to detach from the chargeable electrical device 100 unintentionally. Further, when the charging connector head 102 is attached to the chargeable device 100 it may also be damaged and stop function. Another problem with the prior art is that the charging socket 103 takes up a large space in the chargeable device.
Further, the charging connector head 102 has parts (not shown in figure 1) that extends outwards from the charging connector head 102 that may get stuck in other material and makes the charging connector head 102 more difficult to handle than a connector head with a flat surface.

One way to improve the charging connection is to place a magnet (not shown) in the chargeable device 100 and another magnet (not shown) in the charging connector head 102 illustrated in figure 1. This means that the magnet in the chargeable device 100 and the magnet in the charging connector head 102 connect to each other with a magnetic field. This leads to lower demands on the contact surfaces 105, 105' of the charging connector head 102 and the chargeable electrical device 100. It's not necessary that it is a magnet in both the chargeable electrical device 100 and in the charging connector head 102. One of the magnets may be replaced by any kind of magnetic material e.g. a metal plate. Further, the magnetic field will automatically guide the user via a magnetic force to the right position and even the correct angle for insertion of the charging connector head 102 in the chargeable electrical device 100.

However problem with such a solution is that some parts of modern electrical devices may be sensitive to magnetic fields. One example of such a part could for example be a compass in a mobile telephone. Magnetic cards such as credit cards may also be sensitive to magnetic fields if a magnet is placed close to them. This could for example occur if a credit card and an electrical device comprising a magnet are placed in the same pocket. It is possible to at least some extent shield the magnetically sensitive parts from the magnetic field but this shielding requires space in the chargeable electrical device 100. In small electrical devices, such as mobile phones, available space is a scarce resource.

A common drawback between both magnetic and mechanical systems is that the force that is used for securing the connection must be overcome by the user when the charging connector head 102 shall be disconnected from the chargeable electrical device 100. Thus, there is a design tradeoff between a good secure connection when the charging connector head 102 is attached, and an easy way for the user to release the charging connector head 102 with minimum force. For mechanical couplings this drawback may be overcome with a mechanical release mechanism, but for the magnetic systems there is currently no such mechanism.

This leads to problems with wear in mechanical couplings or introducing magnetic fields that interfere with components of the electrical device.

### SUMMARY

It is therefore an object of embodiments herein to provide an improved way of connecting an electrical device to a connector head.

According to a first aspect of embodiments herein, the object is achieved by an electrical device according to claim 1 which is able to connect to a connector head. The connector head comprises a magnet or an electromagnet. The electrical device comprises an electromagnet or a magnet that is able to connect magnetically to the magnet or electromagnet of the connector head, when supplied with electrical power. The electrical device further comprises an electromagnet controller which is connected to the electromagnet and is able to control the power supply of the electromagnet in dependence of an event occurring in the electrical device.

According to a thirdfourth aspect to embodiments herein, the object is achieved by a computer program product loadable into the memory of a computer. The computer program comprises software code portions adapted for performing one or more actions described herein and/or realizing any or more of the features relating to the electrical device.

Since the electromagnet of the electrical device is controlled by the device itself the magnetic field within the electrical device is optimized in relation to the current needs, without introducing unnecessarily high magnetic interference with magnetically sensitive parts which may deteriorate their functionality.

An advantage of the invention is that the electrical device keeps the advantages of a permanent magnet, without introducing its drawbacks.

Another advantage of embodiments herein is that the magnetic force can be controlled, e.g. low force for guidance, high force for secure connection and reverse force for releasing the connector head.

Another advantage of embodiments herein is that the magnetic field may be lowered or turned off completely when using functions sensitive to magnetic fields.

Another advantage of embodiments herein is that the electromagnet may be switched off when not in use, reducing the problems with magnetic fields in the electrical device.

### BRIEF DESCRIPTION OF THE DRAWINGS

Examples of embodiments herein are described in more detail with reference to attached drawings in which:
Figure 1 is a schematic block diagram of a chargeable electrical device and a charging connector head of a charger according to prior art;
Figure 2 is a schematic block diagram illustrating embodiments of an electrical device and a connector head;
Figure 3 is a schematic block diagram illustrating embodiments of an electromagnet;
Figure 4 is a schematic block diagram illustrating embodiments of an electromagnet;
Figure 5 depicts embodiments of a method in an electrical device; and
Figure 6 is a schematic block diagram illustrating embodiments of an electrical device and a connector head.

### DETAILED DESCRIPTION

Embodiments will be exemplified in the following non-limiting description.

**Figure 2** illustrates **an electrical device 200** connectable to a **connector head 205** according to some embodiments. The electrical device 200 comprises **an electromagnet 203** adapted to generate a magnetic field when supplied with electrical power. The electromagnet 203may be supplied with electrical power from **a battery 201** or any other kind of power source. The electromagnet 203 is further connected to **an electromagnet controller 202** in the electrical device 200. The electromagnet controller 202 is adapted to control the power supply to the electromagnet 203 via **an electromagnet control signal 210.** The electrical device 200 may comprise **a socket 204,** which has a contact surface where the connector head 205 may connect to the electrical device 200. The socket 204 may be connected to the electromagnet 203. The electromagnet controller 202 may be connected to and controlled by **a device controller 209** in the electrical device 200. The device controller 209 is adapted to control the electrical device 200. The electrical device 200 may further comprise **a permanent magnet 208** adapted to give a guiding force to a user when connecting the connector head 205 to the electrical device 200.

The electromagnet 203 of the electrical device 200 is placed adjacent to the socket 204 and is controlled by the electromagnet controller 202. The electromagnet controller 202 may control the magnetic field generated by the electromagnet 203 by sending an **electromagnet control signal 210** to the electromagnet 203. The magnetic field may be increased or decreased depending on an event appearing in the electrical device 200.

The electrical device 200 comprises the electromagnet 203. When supplied with electrical power, the electromagnet 203 is magnetically connectable to the magnet 206 of the connector head 205. The electrical device 200 further comprises an electromagnet controller 202 connected to the electromagnet 203 and adapted to control the power supply to the electromagnet 203 in dependence of an event occurring in the electrical device 200.

The connector head 205 comprises **a magnet 206** adapted to connect magnetically to the electromagnet 203 of the electrical device 200. The magnet 206 may be an electromagnet or a permanent magnet or any kind of magnetic material e.g. a metal plate. The connector head 205 has a contact surface 213 where the connector head 205 may connect to the contact surface 213' of the socket 204 of the electrical device 200. The connector head 205 also comprises **a wire 207** adapted to connect to its corresponding wire 212 of the electrical device 200 at the socket 204.

The connector head 205 being attached to the electrical device 200 may be any kind of connector head such as a connector head of a charger for charging the battery 201, a connector head 205 of a signal cable such as a High-Definition Multimedia Interface (HDMI) or Universal Serial Bus (USB) cable, or a connector head 205 of a cable to e.g. an external speaker. It should be understood that by the term "connector head" is meant an end part of the connector, which end part comprises the contact surface that is configured to be brought in contact with the contact surface of the electrical device 200.

As previously described, the connector head 205 is attached to the electrical device 200 at the socket 204. The socket 204 where the connector head 205 may connect may be a formation in the electrical device 200, a flat surface or any other mechanical coupling according to prior art. The connector head 205 comprises a magnet 206. The electrical device 200 has an electromagnet 203 that is capable of magnetically connect to the magnet 206 of the connector head 205, and keep the connector head 205 connected to the electrical device 200 when supplied with electrical power.

The event may be an event generated internally in the electrical device or by any kind of input from the user of the electrical device.

Below are some non-limiting examples of what the event could be.

In some embodiments, the connector head 205 is a connector head of a charger adapted to charge the battery 201 of the electrical device 200. An external event may then be a user indication event to the electrical device 200 that the charger will be removed by the user. This may be indicated via a button or any other user input means to the electrical device 200. Then the electromagnet controller 202 may send an electromagnet control signal 210 to the electromagnet 203 to decrease the power supply and thus decrease or completely turn off the magnetic force between the electrical device 200 and the connector head 205.

In some embodiments, the event may be an internal event. The internal event may be a battery indication event indicating to the electromagnet controller 202 that the battery 201 is fully charged. Then the electromagnet controller 202 may send an electromagnet control signal 210 to decrease the power supply to the electromagnet 203 which will be described below. Thus decrease or completely turn off the magnetic force between the electrical device 200 and the connector head 205.

The event may further be a timing event indicating that the connector head 205 has recently been connected to the electrical device 200. In such case the electromagnet controller 202 may send an electromagnet control signal 210 to increase the power supply to the electromagnet 203 and thus to increase the magnetic force between the electrical device 200 and the connector head 205.

The event may further be an estimation event, estimating that the electrical device 200 estimates when the connector head 205 will be disconnected by the user. This may be estimated by any kind of historical information or user behavior. For example the electrical device 200 may have information about the user's schedule via a calendar. In this case it may be likely that the user will disconnect the connector head 205 before heading off to a meeting and the electromagnet controller 202 may send an electromagnet control signal 210 to decrease the power supply to the electromagnet 203 and thus to decrease the magnetic force between the electrical device 200 and the connector head 205.

The event may further be a magnetically sensitivity event indicating that a magnetically sensitive part within the electrical device 200 or close to it is to be activated. This means that the magnetically sensitive part will be activated and then the electromagnet controller 202 sends an electromagnet control signal 210 to decrease the power supply to the electromagnet 203. One such magnetically sensitive device may be a compass in a mobile phone.

The connector head 205 may further be a connector head of a signal cable such as a HDMI cable for transferring media content, such as a movie from the electrical device 200 to e.g. an external display. An event in this case may be that the movie has come to an end. In this case the electromagnet controller 202 sends an electromagnet control signal 210 to decrease the power supply to the electromagnet 203.

The electromagnet controller 202 may be connected to or may be a part of a device controller 209 of the electrical device 200. The device controller 209 may be any kind of Central Processing Unit (CPU) or any other logic within the electrical device 200. The device controller 209 may send **a device control signal 211** with information to the electromagnet controller 202 about the event. The device controller 209 may have information about the event occurring either internally in the electrical device 200 or externally outside the electrical device 200. Information about the event may be sent to the electromagnet controller 202 with the device control signal 211.

As previously mentioned, in some embodiments, the electrical device 200 may comprise a permanent magnet 208 adapted to give the user a guiding force to the user when connecting the connector head 205 to the chargeable device 200.

The permanent magnet 208 should preferably be small enough to not introduce any interference in the electrical device or its surroundings.

The electromagnet 203 may be implemented in different ways and below are some non-limiting embodiments described.

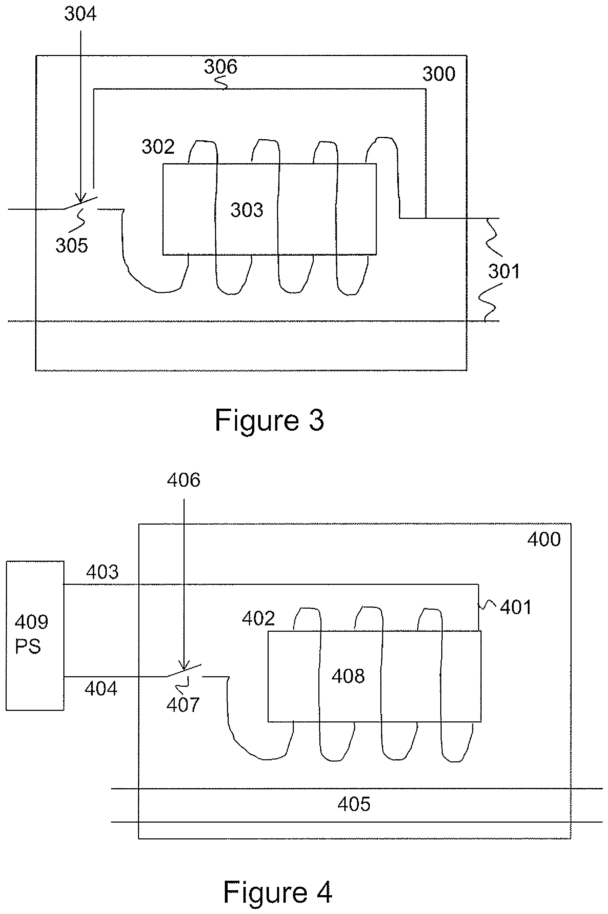

**Figure 3** schematically illustrates **an electromagnet 300** according to some embodiments. Below figure 3 will be described in the context that the connector head 205 is a connector head of a charger adapted to charge the battery 201 of the electrical device 200 with electrical power. However, it is obvious for a skilled person in the art that this is not a limiting example.

The electromagnet 300 may comprise at least one **magnetization wire 301** formed into **a coil 302.** The magnetization wire 301 is connected to the battery 201 (not shown in figure 3) and the corresponding wire 207 (not shown in figure 3) of the connector head 205. When the connector head 205 is attached to the electrical device 200 and when electrical power flows in the magnetization wire 301 a magnetic field is generated in the electromagnet 300.

The magnetic field, generated by the electromagnet 300, may be increased by wrapping the magnetization wire 301 around **an iron core 303.** In figure 3, one of the magnetization wires 301 is formed into a coil 302. In some other embodiments, both magnetization wires 301 may be formed into a coil 302. It is obvious to the skilled person that the two magnetization wires 301 should be formed so the magnetic field in the electromagnet 300 is maximized.

Further, the magnetic field may be controlled by **an electromagnet control signal 210, 304** from the electromagnet controller 202. By sending the electromagnet control signal 210, 304 to **a switch 305** configured to control power supply to the electromagnet 300, the electromagnet controller 202 may turn on or off the electromagnet 300. The switch 305 may be comprised in the electromagnet 300 as schematically illustrated in figure 3 or it may be connected to the electromagnet 300. When the switch 305 is turned off, no electric power passes through the coil 302 and thus no magnetic field is generated. However, the battery 201 may still be charged because in this case the electrical power flows in another wire 306 around the coil 302, and the connector head 205 may stay connected to the electrical device 200 by some mechanical coupling in accordance with prior art. A previously mentioned, the electromagnet controller 202 may turn on or off the electromagnet 300 by a switch 305 as indicated in the figure but any scaling of the electrical power to the coil 302 is possible. Such scaling may create a variable magnetic field.

**Figure 4** illustrates **an electromagnet 400** according to some embodiments. Wires 405 connecting the electrical device 200 to the connector head 205 are independent from **a magnetization wire 401** forming **a coil 402** and thus a magnetic field in the electromagnet 400 when electrical power is supplied to the electromagnet 400. The magnetization wire 401 has **a first end 403 and a second end 404,** both connected to **a power source 409** of the electrical device 200. The power source 409 is adapted to supply electrical power to the electromagnet 400 and may typically be a battery 201. A magnetic field, generated by the electromagnet 400 may be increased by wrapping the magnetization wire 401 around **an iron core 408.** The magnetic field may be controlled by **an electromagnet control signal 210, 406** from the electromagnet controller 202. The electromagnet controller 202 may turn on or off the electromagnet 400 by **a switch 407** as indicated in the figure but, as previously mentioned, any scaling of the electrical power to the coil is possible. The electrical power may also be reversed so the magnetic field may actively "pop out" the connector head 205.

According to some embodiments of the invention the electromagnet 400 is constantly supplied with electrical power from the power source 409 to provide a constant magnetic field giving a guiding force to a user when connecting the connector head 205 to the electrical device 200. The magnetic field in this case may preferably be lower than the case when the magnetic field keeps the electrical device 200 connected to the connector head 205, in order to save power and not introduce unnecessary magnetic fields.

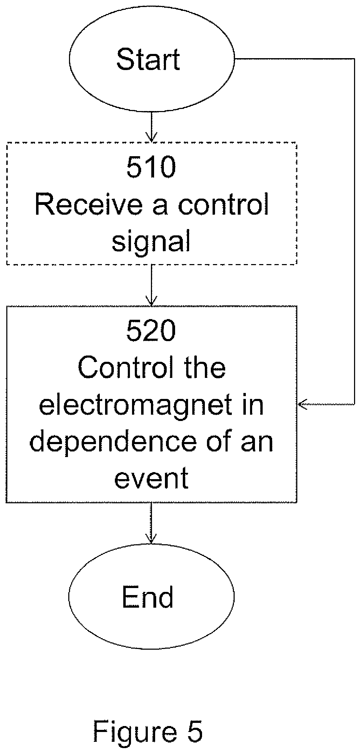

Some embodiments of **a method in the electrical device 200** for controlling supply of electrical power to the electromagnet will now be described with reference to the flowchart depicted in figure 5. As described above the electromagnet 203, 300, 400 is comprised in an electrical device 200. The method comprises the following actions, which actions may be carried out in another suitable order than described below.

### Action 510

The electromagnet controller 202 may in some embodiments receive a device control signal 211 from the device controller 209. The device control signal 211 may comprise information about an event occurring in the electrical device. This could e.g. be an event as described above or any other event. The device control signal 211 may indicate to the electromagnet controller 202 whether or not the electromagnet controller 202 should send an electromagnet control signal 210 to the electromagnet 203, 300, 400 in order to increase to decrease the power supply to the electromagnet 203.

### Action 520

The electromagnet controller 202 controls the power supply to the electromagnet 203. The electromagnet controller 202 may control the supply of electrical power to the electromagnet 203 by sending an electromagnet control signal 210 to the electromagnet 203. The electromagnet control signal 210 is sent in dependence of the event occurring in the electrical device 200. Depending on the event the electromagnet controller 202 may control the electromagnet 203 by controlling whether the power supply to the electromagnet 203 should increase or decrease. In this way the electromagnet 203 may magnetically connect to the magnet 206 of the connector head 205 when the electromagnet 203 is supplied with electrical power.

The action 520 may further comprise that a magnetic field is generated in the electromagnet 203, 300, 400 when supplied with electrical power.

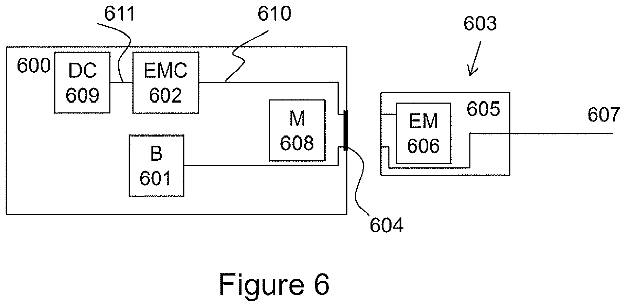

According to some of these embodiments the magnet 206 in the connector head 205 may be an electromagnet. Figure 6 schematically illustrates some embodiments. Figure 6 will be described below in the context that a battery 601 of the electrical device 600 is charged by a charger 603 via a charging wire 607 connecting an electrical device 600 to a connector head 605 at a socket 604. The socket may be any kind of arrangement where the charging wire of the electrical device 600 comes in contact with the charging wires of the connector head 605. It is understood by the skilled person that the connector head 605 may be any kind of connector head 605.

An electrical device 600 comprising a magnet 608 is connectable to a connector head 605 comprising an electromagnet 606. The electromagnet 606 is magnetically connectable to the magnet 608 of the electrical device 600 when supplied with electrical power. The electrical device 600 comprises an electromagnet controller 602 configured to be connected to the electromagnet 606 and adapted to control the power supply to the electromagnet 606 in dependence of an event occurring in the electrical device 600.

The electromagnet controller 602 may be connected via a device control signal 611, to a device controller 609 having the same functionality as the device controller described in relation to figure 2. The skilled person understands that the electromagnet 606 may e.g. be arranged according to the electromagnets 300,400 as described with reference to figure 3 and 4. The electromagnet controller 602 may control the electromagnet 606 via an electromagnet control signal 610 according to the description above. At the socket 604 the electromagnet control signal 610 may be forwarded from the electrical device 600 and the connector head 605 via an electrical connection, an inductive connection or any kind of wireless connection.

The magnet 608 may be a permanent magnet, a magnetic metal plate or an electromagnet. If the magnet 608 is an electromagnet it may be controlled by the electromagnet controller 602.

The electromagnet 606 may be supplied with electrical power from the charger 603 or via the electrical device 600.

According to some another embodiments the electromagnet controller 602 may be comprised in the charger 603 or in the connector head 605 adapted to control the power supply in the electromagnet 606 in dependence of an event occurring in the charger 603 or in the connector head 605.

In embodiments described above reference has been made to an electrical device 200 comprising an electromagnet and/or a magnet and to a connector head comprising a magnet or an electromagnet. It should be understood that this also may be expressed as the electrical device comprises a first magnetic means and as the connector head comprises second magnetic means.

The first magnetic means may be an electromagnet 203 as described in figure 2 or a magnet 608 as described in figure 6. The second magnetic means may be a magnet 206 as described in figure 2 or an electromagnet 606 as described in figure 6

Further as described with reference to figure 2, the electrical device 200 may comprise a third magnetic means. The third magnet means may be a permanent magnet 208.

According to some aspect of embodiments herein, the object is achieved by an electrical device which is able to connect to a connector head. The connector head comprises an electromagnet. The electrical device comprises a magnet that is able to connect magnetically to the electromagnet of the connector head, when the electromagnet is supplied with electrical power. The electrical device further comprises an electromagnet controller which when connected to the electromagnet and is able to control the power supply of the electromagnet in dependence of an event occurring in the electrical device.

According to some aspect to embodiments herein, the object is achieved by an electrical device which is able to connect to a connector head. The connector head comprises a magnet. The electrical device comprises an electromagnet that is able to connect magnetically to the magnet of the connector head, when supplied with electrical power. The electromagnet further comprises an electromagnet controller which is connected to the electromagnet and is able to control the power supply of the electromagnet in dependence of an event occurring in the electrical device.

Some embodiments may also comprise a computer program product loadable into the memory of a computer. The computer program may comprise software code portions adapted for performing one or more actions described above and/or realizing one or more of the features relating to the electrical device 200.

When using the word "comprise" or "comprising" it shall be interpreted as non-limiting, i.e. meaning "consist at least of".

The embodiments herein are not limited to the above-described preferred embodiments. Various alternatives, modifications and equivalents may be used. Therefore, the embodiments should not be taken as limiting the scope of the invention, which is defined by the appending claims.

## Claims

1. An electrical device (200) connectable to a connector head (205), which connector head (205) comprising a magnet (206), the electrical device (200) comprising:
an electromagnet (203, 300, 400), being magnetically connectable to the magnet (206) of the connector head (205), when supplied with electrical power; and
an electromagnet controller (202) connected to the electromagnet (203) and adapted to in dependence of an event occurring in the electrical device (200) control the power supply to the electromagnet (203) of the electrical device (200);
**characterized in that** the electrical device (200) further comprises a permanent magnet (208) adapted to give a guiding force to a user when connecting the connector head (205) to the electrical device (200).

2. The electrical device (200) according to claim 1, wherein the electromagnet (203, 300) comprises at least one magnetization wire (301) formed into a coil (302), which at least one magnetization wire (301) is connected to the connector head (205) and adapted to generate a magnetic field when supplied with electrical power.

3. The electrical device (200) according to claim 2, wherein the electromagnet (203, 300) comprises two magnetization wires (301) formed into a coil (302), which two magnetization wires (301) is connected to the connector head (205) and adapted to generate a magnetic field when supplied with electrical power.

4. The electrical device (200) according to claim 1, wherein the electromagnet (203, 400) comprises a magnetization wire (401) formed into a coil (402), which magnetization wire (401) has a first end (403) and a second end (404); the electrical device (200) further being **characterized by** a power source (409) connected to the first end (403) and to the second end (404) and configured to supply electrical power to the electromagnet (203, 400).

5. The electrical device (200) according to any of claims 1-4, wherein the event is a battery indication event indicating to the electromagnet controller (202) that the battery (201) is fully charged.

6. The electrical device (200) according to any of claims 1-4, wherein the event is an estimation event indicating to the electromagnet controller (202) that a user will detach the connector head (205) from the electrical device (200).

7. The electrical device (200) according to any of claims 1-4, wherein the event is a magnetic sensitivity event indicating that magnetically sensitive device will be used.

8. The electrical device (200) according to any of claims 1-7, wherein the electrical device (200) further comprises a device controller (209), connected to the electromagnet controller (202), the device controller (209) being adapted to send a device control signal (211) comprising information about the event to the electromagnet controller (202).

## Patentansprüche

1. Elektrische Vorrichtung (200), die mit einem Anschlusskopf (205) verbindbar ist, wobei der Anschlusskopf (205) einen Magneten (206) umfasst, wobei die elektrische Vorrichtung (200) umfasst:
einen Elektromagneten (203, 300, 400), der magnetisch mit dem Magneten (206) des Anschlusskopfes (205) verbindbar ist, wenn er mit elektrischer Energie versorgt wird; und
eine Elektromagnetsteuerung (202), die mit dem Elektromagneten (203) verbunden und dazu ausgelegt ist, in Abhängigkeit von einem Ereignis, das in der elektrischen Vorrichtung (200) eintritt, die Energiezufuhr zu dem Elektromagneten (203) der elektrischen Vorrichtung (200) zu steuern;
**dadurch gekennzeichnet, dass** die elektrische Vorrichtung (200) ferner einen Permanentmagneten (208) umfasst, der dazu ausgelegt ist, einem Benutzer beim Verbinden des Anschlusskopfes (205) mit der elektrischen Vorrichtung (200) eine Führungskraft bereitzustellen.

2. Elektrische Vorrichtung (200) nach Anspruch 1, wobei der Elektromagnet (203, 300) mindestens einen Magnetisierungsdraht (301) umfasst, der zu einer Spule (302) geformt ist, wobei der mindestens eine Magnetisierungsdraht (301) mit dem Anschlusskopf (205) verbunden und dazu ausgelegt ist, ein Magnetfeld zu erzeugen, wenn er mit elektrischer Energie versorgt wird.

3. Elektrische Vorrichtung (200) nach Anspruch 2, wobei der Elektromagnet (203, 300) zwei Magnetisierungsdrähte (301) umfasst, die zu einer Spule (302) geformt sind, wobei die zwei Magnetisierungsdrähte (301) mit dem Anschlusskopf (205) verbunden und dazu ausgelegt sind, ein Magnetfeld zu erzeugen, wenn sie mit elektrischer Energie versorgt werden.

4. Elektrische Vorrichtung (200) nach Anspruch 1, wobei der Elektromagnet (203, 400) einen Magnetisierungsdraht (401) umfasst, der zu einer Spule (402) geformt ist, wobei der Magnetisierungsdraht (401) ein erstes Ende (403) und ein zweites Ende (404) aufweist; wobei die elektrische Vorrichtung (200) ferner durch eine Stromquelle (409) gekennzeichnet ist, die mit dem ersten Ende (403) und mit dem zweiten Ende (404) verbunden und dazu ausgestaltet ist, dem Elektromagneten (203, 400) elektrische Energie zuzuführen.

5. Elektrische Vorrichtung (200) nach einem der Ansprüche 1-4, wobei das Ereignis ein Batterieanzeigeereignis ist, das der Elektromagnetsteuerung (202) anzeigt, dass die Batterie (201) vollständig geladen ist.

6. Elektrische Vorrichtung (200) nach einem der Ansprüche 1-4, wobei das Ereignis ein Schätzungsereignis ist, das der Elektromagnetsteuerung (202) anzeigt, dass ein Benutzer den Anschlusskopf (205) von der elektrischen Vorrichtung (200) lösen wird.

7. Elektrische Vorrichtung (200) nach einem der Ansprüche 1-4, wobei das Ereignis ein Magnetempfindlichkeitsereignis ist, das anzeigt, dass eine magnetempfindliche Vorrichtung benutzt werden wird.

8. Elektrische Vorrichtung (200) nach einem der Ansprüche 1-7, wobei die elektrische Vorrichtung (200) ferner eine Vorrichtungssteuerung (209) umfasst, die mit der Elektromagnetsteuerung (202) verbunden ist, wobei die Vorrichtungssteuerung (209) dazu ausgelegt ist, ein Vorrichtungssteuerungssignal (211), das Informationen über das Ereignis umfasst, an die Elektromagnetsteuerung (202) zu senden.

## Revendications

1. Dispositif électrique (200) connectable à une tête de connecteur (205), laquelle tête de connecteur (205) comprenant un aimant (206), le dispositif électrique (200) comprenant :
un électroaimant (203, 300, 400), étant connectable magnétiquement à l'aimant (206) de la tête de connecteur (205), quand il est alimenté électriquement ; et
un contrôleur d'électroaimant (202) connecté à l'électroaimant (203) et adapté pour, en fonction d'un évènement se produisant dans le dispositif électrique (200), commander l'alimentation électrique de l'électroaimant (203) du dispositif électrique (200) ;
**caractérisé en ce que** le dispositif électrique (200) comprend en outre un aimant permanent (208) adapté pour conférer une force de guidage à un utilisateur lors de la connexion de la tête de connecteur (205) au dispositif électrique (200).

2. Dispositif électrique (200) selon la revendication 1, dans lequel l'électroaimant (203, 300) comprend au moins un fil de magnétisation (301) formé en une bobine (302), lequel au moins un fil de magnétisation (301) est connecté à la tête de connecteur (205) et adapté pour générer un champ magnétique quand il est alimenté électriquement.

3. Dispositif électrique (200) selon la revendication 2, dans lequel l'électroaimant (203, 300) comprend deux fils de magnétisation (301) formés en une bobine (302), lesquels deux fils de magnétisation (301) sont connectés à la tête de connecteur (205) et adaptés pour générer un champ magnétique quand il est alimenté électriquement.

4. Dispositif électrique (200) selon la revendication 1, dans lequel l'électroaimant (203, 400) comprend un fil de magnétisation (401) formé en une bobine (402), lequel fil de magnétisation (401) a une première extrémité (403) et une seconde extrémité (404) ; le dispositif électrique (200) étant en outre **caractérisé par** une source d'alimentation électrique (409) connectée à la première extrémité (403) et à la seconde extrémité (404) et configuré pour alimenter électriquement l'électroaimant (203, 400).

5. Dispositif électrique (200) selon une quelconque des revendications 1-4, dans lequel l'évènement est un évènement d'indication de batterie indiquant au contrôleur d'électroaimant (202) que la batterie (201) est complètement chargée.

6. Dispositif électrique (200) selon une quelconque des revendications 1-4, dans lequel l'évènement est un évènement d'estimation indiquant au contrôleur d'électroaimant (202) qu'un utilisateur détachera la tête de connecteur (205) du dispositif électrique (200).

7. Dispositif électrique (200) selon une quelconque des revendications 1-4, dans lequel l'événement est un évènement de sensibilité magnétique indiquant que le dispositif sensible magnétiquement sera utilisé.

8. Dispositif électrique (200) selon une quelconque des revendications 1-7, dans lequel le dispositif électrique (200) comprend en outre un contrôleur de dispositif (209), connecté au contrôleur d'électroaimant (202), le contrôleur de dispositif (209) étant adapté pour envoyer un signal de commande de dispositif (211) comprenant une information relative à l'événement au contrôleur d'électroaimant (202).
